# EUROPEAN PATENT APPLICATION

(11) **EP 2 095 709 A2**
(43) Date of publication of application: **02.09.2009**
(21) Application number: 09250045.3
(22) Date of filing: 08.01.2009
(51) Int. Cl.: A01K 97/10, F16B 7/04

(54) **A joint**

(30) Priority: 29.02.2008 GB 0803772
(71) Applicant: Fox International Group Limited, Hainault, Essex IG6 3UT (GB)
(72) Inventor: Taylor, Adam, Loughton, Essex IG10 2QH (GB)
(74) Representative: Crouch, David John

(57) **Abstract**

A joint (12) comprising two parts (14 and 16) which are connected together, which share a common axis (18) and which can be adjusted relative to one another by relative rotation about their common axis (18). The two parts (14 and 16) have inter-engaging formations (64 and 66) which can inter-engage with different relative angular positions between the two parts (14 and 16) about their common axis (18). Resilient means (70, 74, 76, 82) are provided to urge the two parts (14 and 16) towards one another.

## Description

The present invention relates to a joint comprising two parts which are connected together, which share a common axis and which can be adjusted relative to one another by relative rotation about their common axis.

One such prior construction comprises two such parts with a screw-threaded engagement to enable such an adjustment. However, such an arrangement does not have a plurality of different secure settings of different relative angular positions in which relative rotation about the common axis between the parts is inhibited.

The present invention seeks to provide a remedy.

Accordingly, the present invention is directed to a joint having the construction as set out in the opening paragraph of the present specification, in which the two parts have inter-engaging formations which can interengage with different relative angular positions between the two parts about their common axis, and resilient means are provided to urge the two parts towards one another.

Advantageously, the resilient means comprise a projection on one of the said parts which extends through an aperture in the other part into a hollow therein, the projection being provided with a shoulder portion, and a compression spring extends under compression between a portion of the said other part and the said shoulder to urge the two parts towards one another.

Preferably, the projection comprises a first screw-threaded portion and a screw having a head and a second screw-threaded portion which engages the said first screw threaded portion, the head providing the said shoulder portion.

Advantageously, the first screw-threaded portion is a generally tubular internally screw-threaded portion, and the screw has an externally screw-threaded shank portion which constitutes the said second screw-threaded portion.

The said two parts may be of generally circular cross-section.

Advantageously, the inter-engaging portions may comprise a uniform series of peaks and troughs extending around the respective part, for example in saw-tooth form.

Preferably, one of the said parts is provided with a flange that extends outwardly from that part transversely of the common axis. One of the said two parts may be provided with external screw-threading, and the other of the said two parts may be provided with an internal screw-threaded ring rotatable relative to the said other of the said two parts on which it is held and engagable with the external screw-threading of the said one of the said two parts to lock the two parts together in a selected one of the said different relative angular positions. The said two parts may also be provided with respective clamps which can therefore themselves be set at different relative orientations by virtue of the adjustable joint.

An example of a clamp device having a joint made in accordance with the present invention may now be described with reference to the accompanying drawings, in which:
- Figure 1: shows a side view of a clamp device incorporating a joint embodying the present invention;
- Figure 2: shows an end view of the clamp device shown in Figure 1;
- Figure 3: shows an axial sectional view of the clamp device shown in Figures 1 and 2 taken in the plane indicated by the line III-III shown in Figure 2;
- Figure 4: shows a further side view of the clamp device shown in Figure 1 viewing the latter in the direction of the arrow IV shown in that Figure;
- Figures 5 to 7: show respective perspective views of the device shown in Figures 1 to 4 viewing the device from one side and from one end, with different respective axial orientations of the device;
- Figure 8: shows a joint embodying the present invention incorporated in the clamp device shown in Figure 7;
- Figure 9: shows an underneath view of the joint shown in Figure 8;
- Figure 10: shows an axial sectional view of the joint shown in Figures 8 and 9 taken in the plane indicated by the line X-X in Figure 9;
- Figure 11: shows a further side view of the device shown in Figures 8 to 10; and
- Figure 12: shows a perspective view of the joint shown in Figures 8 to 10 viewing it from one side and from one end.

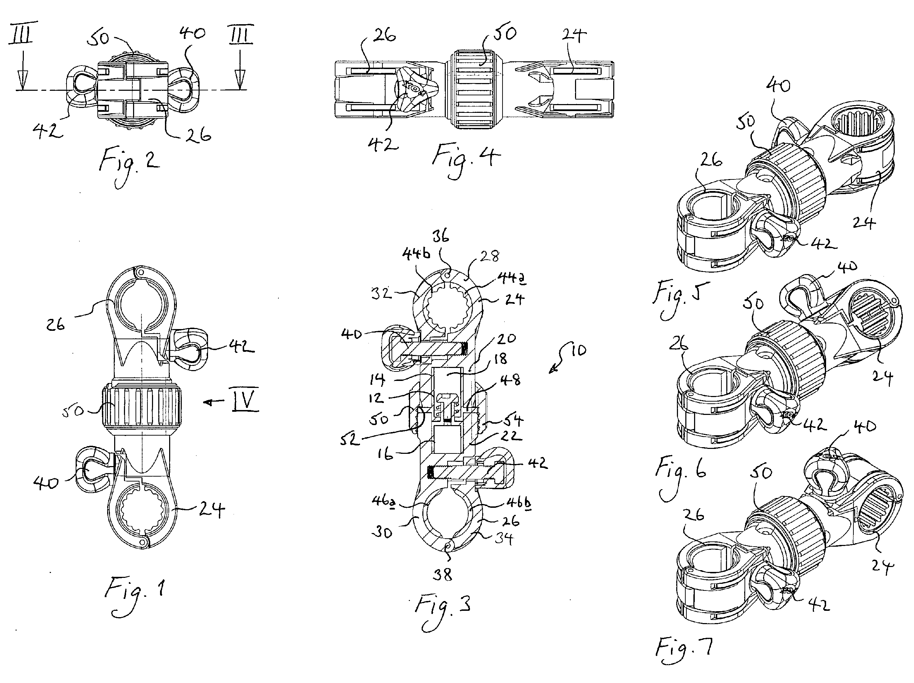

The clamp device 10 shown in Figures 1 to 7 comprises a joint 12 which has two parts 14 and 16 which share a common axis 18 and which can be adjusted to different relative angular positions about that axis 18. The parts 14 and 16 are generally tubular, and their outer ends are generally of square cross-section to the outside of which are secured respective tubular portions 20 and 22 of respective clamps 24 and 26. Each clamp 24 and 26 comprises a first fixed jaw 28,30 and a second jaw 32,34 pivoted to the first jaw 28,30 at a pivot 36,38 at the respective extremities of the clamp device 10. Inner ends of the jaws 28,30 and 32,34 can be drawn more closely together by means of a screw-threaded adjustment 40,42. The interiors of the jaws 28,30 and 32,34 are provided with respective liners 44a,44b and 46a, 46b. The liners 44a,44b have a ribbed inner surface, with the ribbing transverse of the axis 18. The liners 46a and 46b have a relatively smooth inner surface.

The adjustable joint 12 is provided with a flange 48 on one of its parts which protrudes outwardly beyond the tubular portion 20 of the clamp 24. A securing ring 50 is provided with a shoulder 52 which engages the flange 48 and has an internally screw-threaded portion 54 which engages an externally screw-threaded portion of the tubular part 22 of the clamp 26.

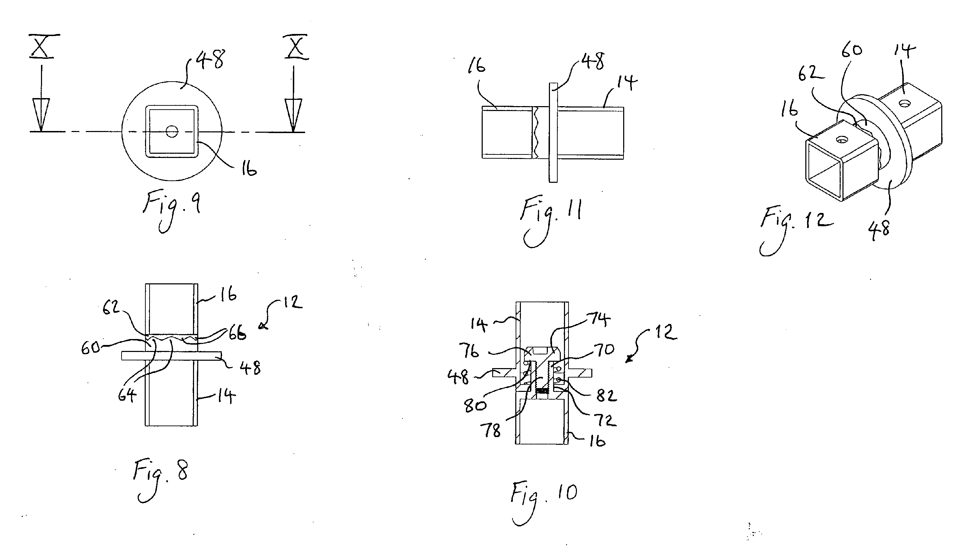

Details of the joint 12 are shown more clearly in Figures 8 to 12. Thus, inner portions 60 and 62 of the parts 14 and 16 of the joint 12 are of circular cross-section, and have inter-engaging portions 64 and 66 comprising repeated uniform series of peaks and troughs in saw-tooth form. The part 16 has an internally screw-threaded projecting tubular portion 70 extending through an aperture 72 at an inner end of the portion 14 beyond the flange 48. A screw 74 having a head 76 and an externally screw-threaded shank portion 78 is screwed into the projecting tubular portion 70 to provide a shoulder portion 80. A helical compression spring 82 under compression extends between the inside of the lower end of the part 14 and the shoulder 80 provided by the head 76 of the screw 74.

With this construction of joint and clamp device, it will be appreciated that each clamp 24 and 26 can be released and tightened by means of its associated screw-threaded adjustment 40 and 42. The latter can be removed completely and the second jaw 32,34 pivoted about the pivot 36,38 to open the clamp completely if desired. Also, the relative angular orientation of the clamps 24 and 26 can be adjusted by means of the adjustable joint 12. To effect this, the ring 50 may be disengaged from the externally screw-threaded tubular portion 22 of the clamp 26, enabling the two clamps 24 and 26 to be pulled apart a little against the force exerted by the compression spring 82 so that the head of the screw 76 is drawn closer to the inner end of the part 14 and the inter-engaging formations 64 and 66 are disengaged. The two clamps 24 and 26 can now be rotated relative to one another about the common axis 18, and with the selected relative angular orientation the two clamps 24 and 26 may then be allowed to be drawn closer together by the action of the compression spring 82. The ring 50 may now be screwed back on to the tubular portion 22 of the clamp 26 to fix the clamp device with this new relative orientation between its clamps 24 and 26.

Any one of eight equiangularly spaced different relative orientations of the clamps 24 and 26 may be selected in this way for the illustrated clamp device, but the construction may be modified for a larger or smaller number of possible orientations.

The clamping device may be used for example by fixing the clamp 24 onto an upright leg or other upright elongate portion of an angling box or chair, and the other clamp 26 may be used to hold another elongate part at any desired angle relative to the leg or other upright portion. Alternatively, the portion to which the clamp 24 is attached may be on a slant, in which case the further elongate part may be held by the clamp 26 in an upright position by appropriate adjustment of the joint 12.

Apart from the spring 82 which is made of metal, the various parts of the illustrated clamp device 10 are made of synthetic plastics material.

Numerous variations and modifications to the illustrated device may occur to the reader without taking the resulting construction outside the scope of the present invention. To give one example only, the inter-engaging portions 64 and 66 may be castellations instead of having a saw-tooth form.

## Claims

1. A joint (12) comprising two parts (14 and 16) which are connected together, which share a common axis (18) and which can be adjusted relative to one another by relative rotation about their common axis (18), **characterised in that** the two parts (14 and 16) have inter-engaging formations (64 and 66) which can interengage with different relative angular positions between the two parts (14 and 16) about their common axis (18), and resilient means (70, 74, 76, 82) are provided to urge the two parts (14 and 16) towards one another.

2. A joint according to claim 1, **characterised in that** the resilient means (82) comprise a projection (70, 74) on one of the said parts (16) which extends through an aperture (72) in the other part (14) into a hollow therein, the projection (70, 74) being provided with a shoulder portion (80), and a compression spring (82) extends under compression between a portion of the said other part (14) and the said shoulder (80) to urge the two parts (14 and 16) towards one another.

3. A joint according to claim 2, **characterised in that** the projection (70, 74) comprises a first screw-threaded portion (70) and a screw (74) having a head (76) and a second screw-threaded portion (78) which engages the said first screw threaded portion (70), the head (74) providing the said shoulder portion (80).

4. A joint according to claim 3, **characterised in that** the first screw-threaded portion (70) is a generally tubular internally screw-threaded portion, and the screw (74) has an externally screw-threaded shank portion (78) which constitutes the said second screw-threaded portion.

5. A joint according to any preceding claim, **characterised in that** the said two parts (14 and 16) are of generally circular cross-section.

6. A joint according to any preceding claim, **characterised in that** the inter-engaging formations (64 and 66) comprise a uniform series of peaks and troughs extending around the respective part (14 or 16).

7. A joint according to claim 6, **characterised in that** the said peaks and troughs (64 and 66) are in saw tooth forms.

8. A joint according to any preceding claim, **characterised in that** one of the said parts (14) is provided with a flange (48) that extends outwardly from that part (14) transversely of the common axis (18).

9. A joint according to any preceding claim, **characterised in that** one of the said two parts (16) is provided with external screw-threading, and the other of the said two parts (14) is provided with an internal screw-threaded ring (50) rotatable relative to the said other of the said two parts (14) on which it is held and engagable with the external screw-threading of the said one of the said two parts (16) to lock the two parts together (14 and 16) in a selected one of the said different relative angular positions.

10. A joint according to any preceding claim, **characterised in that** the said two parts (14 and 16) are provided with respective clamps (24, 26) which can therefore themselves be sent at different relative orientations by virtue of the adjustable joint (12).
